# EUROPÄISCHE PATENTANMELDUNG

(11) **EP 0 879 726 A2**
(43) Veröffentlichungstag der Anmeldung: **25.11.1998**
(21) Anmeldenummer: 98105193.1
(22) Anmeldetag: 23.03.1998
(51) Int. Cl.: B60K 15/03

(54) **Behälter aus Metall, sowie Verfahren und Vorrichtung zu dessen Herstellung**

(30) Priorität: 20.05.1997 CH 1166/97
(71) Anmelder: ELPATRONIC AG, CH-6303 Zug (CH)
(72) Erfinder: Urech, Werner, 5466 Kaiserstuhl (CH)

(57) **Zusammenfassung**

Ein Behälter (1), vorzugsweise ein Automobilkraftstofftank, wird durch Verschweissen zweier tiefgezogener Teile gebildet. Danach werden die dem Schweissflansch (6) benachbarten Seitenwände (14, 15) des Behälters nach aussen ausgebaucht, vorzugsweise durch Innenhochdruckumformung in einer Form (20). Es entsteht ein Behälter, der den durch den Flansch (6) ohnehin benötigten Einbauraum besser ausnützt als ein herkömmlicher Behälter bzw. Tank.

## Beschreibung

Die Erfindung betrifft einen Behälter aus Metall, insbesondere einen Kraftstofftank aus Stahl, welcher aus Teilen unter Bildung eines Schweissflansches zusammengesetzt und entlang des Schweissflansches verschweisst ist. Ferner betrifft die Erfindung ein Verfahren zur Herstellung eines Behälters aus Metall, insbesondere eines Kraftstofftanks aus Stahl sowie eine Vorrichtung zur Herstellung des Behälters.

Es ist bekannt, Kraftstoffbehälter für Fahrzeuge aus tiefgezogenen Teilen aus Metall, insbesondere Stahl, zu einem Behälter zu verschweissen. Dabei werden in der Regel zwei tiefgezogene, wannenförmige Teile, die je einen Flansch entlang ihrer Wannenöffnung aufweisen, mit diesen bei beiden Teilen kongruent ausgebildeten Flanschen aufeinandergelegt und der aus den beiden Teilflanschen entstehende gemeinsame Flansch wird durch Rollennahtschweissung, in der Regel mittels Schweissrollen und Drahtzwischenelektroden, verschweisst. Natürlich sind auch andere Schweissverfahren, z.B., stirnseitige Laserschweissung des Flansches möglich. Diese geschilderte Herstellung ergibt Behälter bzw. Tanks von guter Qualität. Zur Ausführung der Schweissung muss der Flansch eine gewisse minimale Breite aufweisen. Der fertige Tank wird also von einem umlaufenden Flansch umgeben, welcher einen grösseren Einbauraum des Tanks im Fahrzeug bedingt, als es das tatsächliche nutzbare Tankvolumen erfordern würde. Seitens der Fahrzeugindustrie besteht indes der Wunsch nach möglichst geringen äusseren Dimensionen der Tanks bei gegebenem Inhalt.

Es stellt sich daher die Aufgabe, einen Behälter aus Metall und insbesondere einen stählernen Kraftstofftank zu schaffen, der den genannten Nachteil nicht aufweist, bzw. bei dem der Flansch nicht als störendes Element wirkt.

Diese Aufgabe wird beim Behälter der eingangs genannten Art durch die kennzeichnenden Merkmale des Anspruchs 1 gelöst und beim Verfahren der eingangs genannten Art durch die kennzeichnenden Merkmale des Anspruchs 4.

Durch die Verformung der an den Flansch anschliessenden Wandbereiche des Behälters nach aussen, kann das Volumen des Behälters erhöht werden. Der ohnehin durch den Flansch benötigte Einbauraum für den Behälter bzw. dessen grösste Aussendimensionen können dabei aber gleich gross bleiben, so dass der bisher beim Einbau durch den Flansch bedingte "tote Raum" genutzt werden kann. Der geschweisste Stahltank kann auf diese Weise unter Beibehaltung seiner Vorteile für viele Einbausituationen praktisch das Volumen eines geblasenen Kunststofftanks erreichen oder dieses aufgrund der geringeren Wandstärke des Stahlblechs sogar übertreffen.

Vorzugsweise erfolgt die Verformung so weit nach aussen, dass die verformte Tankwandung im Bereich der durch die Stirnseite des Flansches definierten Ebene endet; eine Verformung über dieses Mass hinaus ist indes ebenfalls möglich und kann zur Nutzung spezieller Einbauräume wünschbar sein.

Ferner betrifft die Erfindung eine spezielle Vorrichtung gemäss Anspruch 10 zur Herstellung des Behälters.

Im folgenden werden Ausführungsbeispiele der Erfindung anhand der Zeichnungen näher erläutert.

Dabei zeigt
Figur 1 einen Kraftstoffbehälter nach Stand der Technik;
Figur 2 schematisch in Schnittansicht einen Kraftstoffbehälter im Inneren einer Form zur Innendruckumformung; und
Figur 3 eine Schnittansicht durch einen Teil des Behälters nach der Verformung.

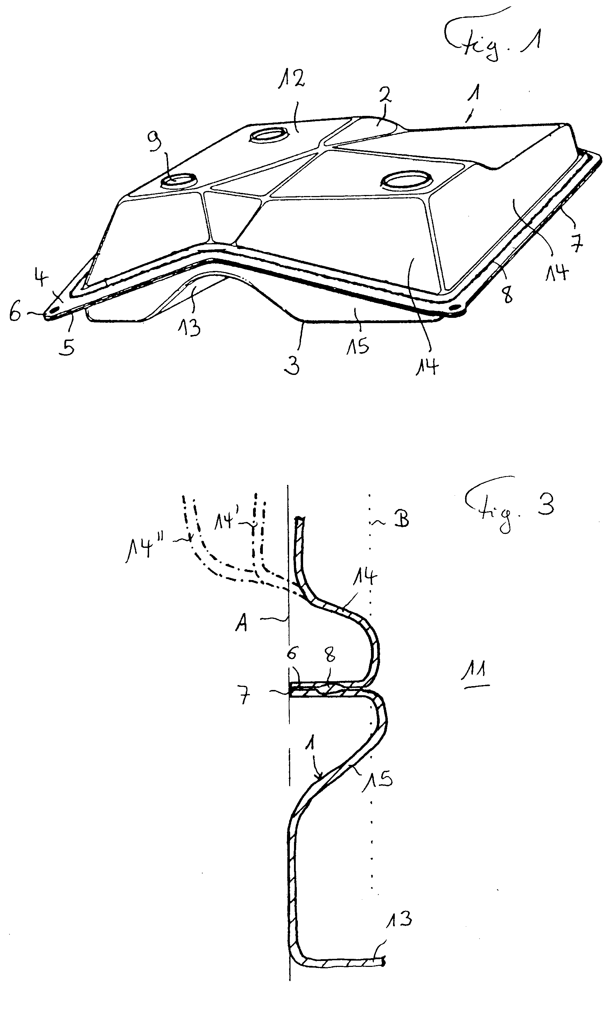

Figur 1 zeigt eine Ansicht eines Kraftstoffbehälters 1 für ein Fahrzeug. Der aus Stahl oder einem anderen Metall bestehende Behälter ist aus zwei Teilen 2 bzw. 3 zusammengefügt, welche je z.B. durch Tiefziehen gebildet worden sind. Jedes Teil 2,3 weist einen umlaufenden Flansch 4 bzw. 5 auf, welche beim Aufeinanderlegen der Teile 2,3 zur Bildung des Behälters zusammen einen Flansch 6 bilden. Mittels einer Schweissnaht 8 werden die Flansche 4, 5 dauerhaft zum Flansch 6 verbunden. Die Bildung der Schweissnaht erfolgt z.B. durch Rollennahtschweissen mit Schweissrollen und Drahtzwischenelektroden. Ersichtlich ist, dass der Flansch 6 eine den Behälter deutlich vergrössernde Aussenabmessung ergibt, die das Einbauen des Behälters in Kraftfahrzeuge erschweren kann, bzw. die ein ungünstiges Füllvolumen im Vergleich zum vom Behälter benötigten Einbauraum ergibt. Der als Beispiel dargestellte Behälter weist einen Flansch 6 auf, der nicht in einer Ebene liegt. Dies hat auf die vorliegende Erfindung aber keinen Einfluss, diese ist auch bei Behältern anwendbar, deren Flansch 6 in einer Ebene liegt. Der Behälter 1 ist in der Regel mit mehreren Öffnungen 9 versehen, welche auf bekannte Weise zur Befüllung und/oder Entlüftung zum Einbau eines Füllstandsgebers, einer Kraftstoffpumpe usw. dienen.

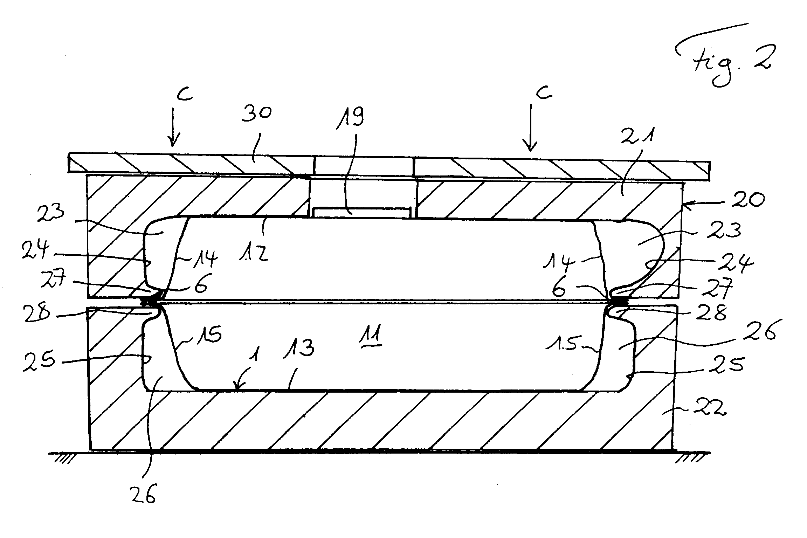

Gemäss der Erfindung wird nun mindestens eine der an den Flansch 6 anschliessenden Seitenwände des Behälters oder ein Teil einer solchen Wand so verformt, dass sich die Seitenwand oder ein Teil davon in Richtung der Stirnfläche des Flansches 6 auswölbt. Figur 3 zeigt dazu eine Schnittansicht eines Teils der Behälterwandung eines entsprechenden Behälters 1. Ersichtlich ist der Flansch 6 mit dessen Stirnwand 7, deren Fläche in der Ebene A liegt. Mit 11 ist der Behälterinnenraum bezeichnet. Die dem Flansch 6 benachbarten Seitenwände 14 und 15 des Behälters 1 sind nun in Richtung auf die Stirnwand 7 des Flansches 6 nach aussen gewölbt, anstelle des bisher nach Stand der Technik üblichen Verlaufes ungefähr entlang der punktierten Linie B. Die Ausformung der Seitenwand kann sich, wie dargestellt, bis zur Ebene A erstrecken und im weiteren Verlauf kann die Seitenwand dieser Ebene A folgen, bis der Übergang von der Seitenwand 14, 15 in die jeweilige Boden- oder Deckenwandung des Behälters erfolgt, wobei in Figur 3 nur die Bodenwandung 13 teilweise dargestellt ist. Die Seitenwand 14 oder 15 kann auch über die Ebene A hinaus gewölbt sein, wie dies mit den strichpunktiert angedeuteten Verläufen 14' und 14'' in Figur 3 dargestellt ist.

Figur 2 zeigt schematisch in Schnittdarstellung eine bevorzugte Art der Herstellung eines erfindungsgemässen Behälters. Dabei ist der - gegenüber Fig. 1 vereinfacht dargestellte - Behälter 1 in seiner nach der Schweissung des Flansches 6 sich ergebenden Grundform gezeigt. Gleiche Bezugszeichen wie bisher verwendet, bezeichnen dabei die bisher erläuterten Teile des Behälters 1, insbesondere die an den umlaufenden Flansch 6 anschliessende obere Seitenwand 14 und untere Seitenwand 15, welche in die Bodenwand 13 bzw. Deckenwand 12 übergehen. In Figur 2 ist nur eine einzige Behälteröffnung 19 dargestellt. Der Behälter 1 ist in einer horizontal geteilten, zweiteiligen Form 20 angeordnet, mit einem oberen Formteil 21 und einem unteren Formteil 22. Die Formteile liegen in der gezeigten Darstellung mit ihrer Innenwandung an der Boden- bzw. Deckenwand 13, bzw. 12 des Behälters, an. Die Formteile 21, 22 weisen ferner am Flansch 6 anliegende Teile 27, 28 auf, die den gesamten Flansch 6 zwischen sich einklemmen, wenn auf die Formteile durch eine nicht gezeigte und nur mit der Pressplatte 30 angedeutete Einrichtung, eine die Formteile zusammenpressende Kraft in Richtung der Pfeile C erzeugt wird.

Der Behälter ist somit entlang seines gesamten Flansches 6 in der Form 20 eingespannt. In der Regel entlang des gesamten Behälterumfanges sind in der Form 20 Hohlräume 23 und 26 vorgesehen, welche einerseits von der Forminnenwand und andererseits von den Seitenwänden 14 bzw. 15 des Behälters 1 begrenzt werden. In diese Hohlräume hinein, bis an die entsprechende Innenwandung 24 bzw. 25 der Form wird die Behälterwandung plastisch verformt, um die Auswölbung der Seitenwände 14,15 in der gewünschten Form zu erzeugen. Vorzugsweise erfolgt die plastische Verformung der Behälterwände durch Innenhochdruckumformung. Bei diesem bekannten Verfahren wird ein Fluid in ein Bauteil, in der Regel ein rohrförmiges Bauteil, eingebracht und unter so hohen Druck gesetzt, dass sich eine plastische Verformung des Bauteils ergibt. Vorliegend wird nun das an sich bekannte Verfahren der Innenhochdruckumformung zur gewünschten Verformung des Behälters verwendet. Dabei kann im gezeigten Beispiel das Fluid durch die Öffnung 19 eingebracht werden. Wird das Fluid auf bekannte, hier nicht weiter erläuterte Weise unter hohen Druck gesetzt, so bauchen sich die Seitenwände 14,15 des Behälters auf dem ganzen Behälterumfang aus und verformen sich plastisch und nehmen die gewölbte, durch die Innenwandungen 24,25 vorgegebene Form an. Dabei wird das Volumen des Behälters vergrössert und es findet eine Streckung des Behältermaterials statt. Die Boden- und Deckenwand 13 bzw. 12 des Behälters wird nur im Bereich der Seitenwände verformt. Sofern gewünscht, könnte natürlich durch entsprechende Ausbildung der Form 20 auch eine zusätzliche Verformung von Bodenwand 13 und/oder Deckenwand 12 erzielt werden.

Da der Flansch 6 bei der Verformung zwischen den Formteilen 21, 22 eingeklemmt ist, kann die Belastung der Schweissnaht bei der Verformung des Behälters gering gehalten werden.

Zur Entformung des Tanks aus der Form 20 weist diese mindestens eine nicht dargestellte Teilung in einer zur Klemmfläche im wesentlichen senkrechten Ebene auf, was die Entnahme des umgeformten Tanks aus der Form erlaubt.

Anstelle der beschriebenen Innenhochdruckumformung in der Form 20 können die Ausbuchtungen der Seitenwände 14, 15 des Behälters auch auf andere Weise erzeugt werden. So kann bei genügend grosser Öffnung 19, bzw. Öffnungen 9, ein Werkzeug in den Tank eingebracht werden, das auf die Behälterseitenwände einwirken und diese verformen kann, z.B. ein hydraulisch oder pneumatisch spreizbares Werkzeug. Ferner kann auch durch eine Druckausübung auf die Boden- und/oder die Deckenwand des Behälters bei geeigneter Behälterform ein zumindest teilweises Ausbauchen der Seitenwände erzielt werden. Zu beachten ist dabei, dass durch ein solches Vorgehen die Höhe des Behälters reduziert wird, so dass sich in der Regel keine Volumenerhöhung ergibt; es tritt aber dennoch der hauptsächlich angestrebte Vorteil auf, dass der vom Flansch beanspruchte Einbauraum besser genutzt werden kann. Wird die Höhenreduktion durch das Ausbauchen der Seitenwände von Anfang an einbezogen, indem der Behälter zunächst zu hoch gebildet und nachträglich gestaucht wird, so ergibt sich auch die gewünschte Volumenerhöhung in Relation zum vorhandenen Einbauraum.

Anstelle der geschilderten Verfahren, bei denen die Verformung der Seitenwände erst nach dem Verschweissen des Flansches 6 erfolgt, ist es grundsätzlich auch möglich, die Verformung in den beiden Teilen 2, 3 vor dem Zusammensetzen und Verschweissen vorzunehmen. Eine Rollennahtschweissung auf bekannte Weise wird dann allerdings unmöglich, da der Flansch 6 nicht mehr für die Schweissrollen zugänglich ist. Möglich wäre es aber, den Flansch mit schräggestellten, in den entlang der Flanschen verlaufenden Vertiefungen eintauchenden Rollen zu schweissen. Eine Laserschweissung, insbesondere stirnseitig des Flansches 6 ist aber weiterhin möglich.

## Patentansprüche

1. Behälter (1) aus Metall, insbesondere ein Kraftstofftank aus Stahl, welcher als aus Teilen (2,3) zusammengesetzter Behälter mit umlaufendem, verschweisstem Verbindungsflansch (6) gebildet ist, dadurch gekennzeichnet, dass mindestens ein dem Flansch (6) benachbartes Wandteil (14, 15) des Behälters in Richtung der Stirnseite (7) des Flansches gewölbt ist.

2. Behälter nach Anspruch 1, dadurch gekennzeichnet, dass der gewölbte Wandteil (14, 15) im wesentlichen bis zur Ebene (A) der Stirnseite des Flansches gewölbt ist.

3. Behälter nach Anspruch 1, dadurch gekennzeichnet, dass der gewölbte Wandteil (14', 14'') über die Ebene (A) der Stirnseite des Flansches hinaus gewölbt ist.

4. Verfahren zur Herstellung eines Behälters (1) aus Metall, insbesondere eines Kraftstofftanks aus Stahl, welcher aus Teilen (2, 3) unter Bildung eines Schweissflansches (6) zusammengesetzt und verschweisst wird, dadurch gekennzeichnet, dass nach der Schweissung eine Umformung des Behälters erfolgt, bei welcher mindestens ein an den Schweissflansch (6) angrenzender Wandbereich (14,15) nach aussen verformt wird.

5. Verfahren nach Anspruch 4, dadurch gekennzeichnet, dass die Umformung durch ein im Behälter wirkendes Fluid erfolgt, welches unter zur plastischen Verformung des Behälters ausreichenden Druck gesetzt wird.

6. Verfahren nach Anspruch 4 oder 5, dadurch gekennzeichnet, dass bei der Verformung eine Klemmung des Schweissflansdies (6) zwischen Klemmbacken (27, 28) erfolgt.

7. Verfahren nach den Ansprüchen 5 und 6, dadurch gekennzeichnet, dass die Verformung in einer den Behälter 1 umschliessenden Form (20) erfolgt, deren Formteile (21, 22) die Klemmbacken (27, 28) bilden.

8. Verfahren nach den Ansprüchen 4 bis 7, dadurch gekennzeichnet, dass eine Verformung im wesentlichen bis zur Ebene (A) der Stirnseite (7) des Schweissflansches erfolgt.

9. Verfahren nach einem der Ansprüche 4 bis 7, dadurch gekennzeichnet, dass eine Verformung über die Ebene (A) der Stirnseite (7) des Schweissflansches (6) hinaus erfolgt.

10. Vorrichtung zur Herstellung eines Behälters nach den Ansprüchen 1 bis 9, gekennzeichnet durch eine den verschweissten Behälter (1) aufnehmende, verschliessbare Form (20), welche im Bereich der Stirnwände (14, 15) des Behälters mindestens eine Ausnehmung (23, 26) in der Form der herzustellenden Ausformung der Seitenwand aufweist, und eine Einrichtung zum Einspeisen eines Fluids in den Behälter.

11. Vorrichtung nach Anspruch 10, dadurch gekennzeichnet, dass die Form eine Klemmeinrichtung (27, 28) aufweist, mittels welcher eine Klemmkraft auf den Schweissflansch (6) des Behälters ausübbar ist.
